# FASCICULE DE BREVET EUROPEEN

(11) **EP 3 205 380 B1**
(45) Date de publication et mention de la délivrance du brevet: **14.11.2018**
(21) Numéro de dépôt: 16202025.9
(22) Date de dépôt: 02.12.2016
(51) Int. Cl.: A63B 71/08

(54) **ENSEMBLE COMPRENANT UNE ÉBAUCHE DE PROTÈGE DENTS ET UN OUTIL POUR LA PRISE D EMPREINTE D'UN ARC DENTAIRE**
EINHEIT, DIE EINEN ROHLING EINES MUNDSCHUTZES UND EIN WERKZEUG ZUM ABDRUCKNEHMEN EINES ZAHNBOGENS UMFASST
ASSEMBLY COMPRISING A BLANK FOR PROTECTING TEETH AND A TOOL FOR TAKING AN IMPRESSION OF A DENTAL ARCH

(30) Priorité: 12.02.2016 FR 1651148
(43) Date de publication de la demande: 16.08.2017
(73) Titulaire: DECATHLON, 59650 Villeneuve d'Ascq (FR)
(72) Inventeur: BOUSQUET, Chloé, 59100 Roubaix (FR); DHULU, Laurent, 59930 La Chapelle d'Armentières (FR)
(74) Mandataire: Sayettat, Julien Christian

(56) Documents cités:
- GB-A- 2 473 864
- US-A- 5 320 114

## Description

L'invention concerne un ensemble comprenant une ébauche de protège-dents qui présente au moins une gouttière en matériau thermo-déformable pour la réception d'au moins une portion d'un arc dentaire, ainsi qu'un outil permettant la prise d'empreinte de ladite portion d'arc dans ladite gouttière après chauffage dudit matériau.

Elle s'applique en particulier aux ensembles pour la formation d'un protège dents adapté à la morphologie dentaire et buccale d'un utilisateur, ledit protège dents étant destiné à être porté sur au moins un arc dentaire dudit utilisateur pour protéger les dents contre les chocs portés aux mâchoires, notamment durant la pratique d'un sport de contact, par exemple un sport de combat tel que la boxe ou les arts martiaux, ou un sport collectif tel que le rugby.

Pour ce faire, ces ensembles comprennent une ébauche de protège dents présentant au moins une gouttière pour la réception d'au moins une portion d'un arc dentaire, ladite gouttière étant réalisée en matériau déformable pour permettre à l'utilisateur de former un protège dents adapté à sa morphologie dentaire et buccale en formant une empreinte de ladite portion d'arc dans ladite gouttière.

En particulier, la gouttière est formée en un matériau thermo-déformable, par exemple à base d'un matériau polymère tel que l'éthylène acétate de vinyle (EVA), de sorte que l'utilisateur doit, pour former le protège-dents, chauffer l'ébauche à une température suffisante de ramollissement, par exemple en la plongeant dans de l'eau chaude ou en la plaçant au micro-ondes pendant quelques secondes. Ensuite, en plaçant l'ébauche chauffée sur son arc dentaire puis en la mordant, l'empreinte de l'arc dentaire est formée dans la gouttière pour y être prise après refroidissement.

Ces ensembles comprennent généralement un outil ayant un manche de préhension portant une tête de maintien de l'ébauche lors de la prise d'empreinte, non seulement pour faciliter sa manipulation par l'utilisateur, notamment durant l'étape de chauffage, mais aussi pour assurer un bon maintien de ladite ébauche relativement à l'arc dentaire, notamment au niveau des incisives, qui sont les plus exposées en cas de coup aux mâchoires.

Pour ce faire, on connaît du document FR-2 975 011 un ensemble dans lequel l'outil de prise d'empreinte est agencé pour maintenir l'ébauche au niveau de zones arrière de réception des molaires, la tête dudit outil comprenant pour ce faire deux branches latérales équipées chacune d'ergots destinés à être engagés dans des orifices formés sur l'ébauche au niveau desdites zones arrière.

Toutefois, cette solution ne donne pas entière satisfaction, en ce qu'elle nécessite de former l'ébauche avec une épaisseur de matériau importante au niveau de ces zones arrière, ce qui complique sa réalisation et rend le protège dents peu confortable, d'autant plus qu'une telle surépaisseur arrière est superflue en termes de protection, puisque les molaires sont moins exposées aux chocs subis par les mâchoires.

Pour pallier ces inconvénients, on connait, notamment des documents EP-0 875 265 et EP-2 482 942, des ensembles dans lesquels l'outil de prise d'empreinte est agencé pour maintenir l'ébauche par l'avant, notamment au niveau d'une zone avant pour la réception des incisives, la tête dudit outil comprenant pour ce faire des saillies avant destinées à être engagées dans des orifices formés au travers de ladite zone avant.

Toutefois, ces solutions posent également problème, en ce qu'elles ne permettent pas une bonne répartition du matériau déformable au niveau des incisives lors de la prise d'empreinte, de sorte que la protection conférée auxdites incisives n'est pas satisfaisante alors même qu'elles sont le plus exposées.

L'invention vise à perfectionner l'art antérieur en proposant un ensemble dans lequel l'outil de prise d'empreinte est agencé pour maintenir une ébauche de géométrie bien adaptée à la morphologie dentaire et buccale d'un utilisateur, et ce tout en garantissant une protection optimale des incisives après la prise d'empreinte.

A cet effet, l'invention propose un ensemble comprenant une ébauche de protège-dents présentant au moins une gouttière en matériau thermo-déformable pour la réception d'au moins une portion d'un arc dentaire, ledit ensemble comprenant en outre un outil permettant la prise d'empreinte de ladite portion d'arc dans ladite gouttière après chauffage dudit matériau, ledit outil présentant un manche de préhension portant une tête de maintien de ladite ébauche, au moins ladite tête étant réalisée à base d'un matériau demeurant rigide à une température de déformation de la gouttière, ladite tête présentant une voute dont la face avant est complémentaire d'une paroi avant de ladite ébauche, au moins une zone de la gouttière destinée à la réception des incisives s'étendant à l'arrière de ladite paroi avant, la voute comprenant deux pattes qui sont espacées sur sa face avant d'une distance telle qu'elles sont disposées respectivement sous une zone d'incisive latérale de la gouttière une fois maintenue sur la tête, lesdites pattes présentant une hauteur qui est agencée pour former entre elles une cavité qui est disposée sous une zone d'incisives centrales de ladite gouttière.

D'autres particularités et avantages de l'invention apparaîtront dans la description qui suit, faite en référence aux figures annexées, dans lesquelles :

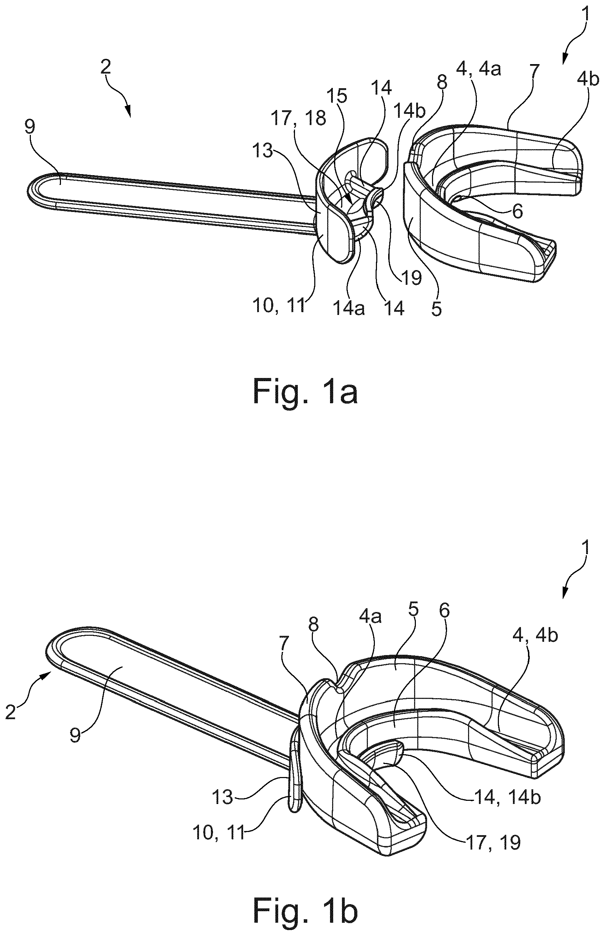

- les figures 1a et 1b sont des représentations en perspective vue de dessus d'un ensemble selon l'invention, respectivement avant (figure 1a) et pendant (figure 1b) le maintien de l'ébauche sur la tête de l'outil ;

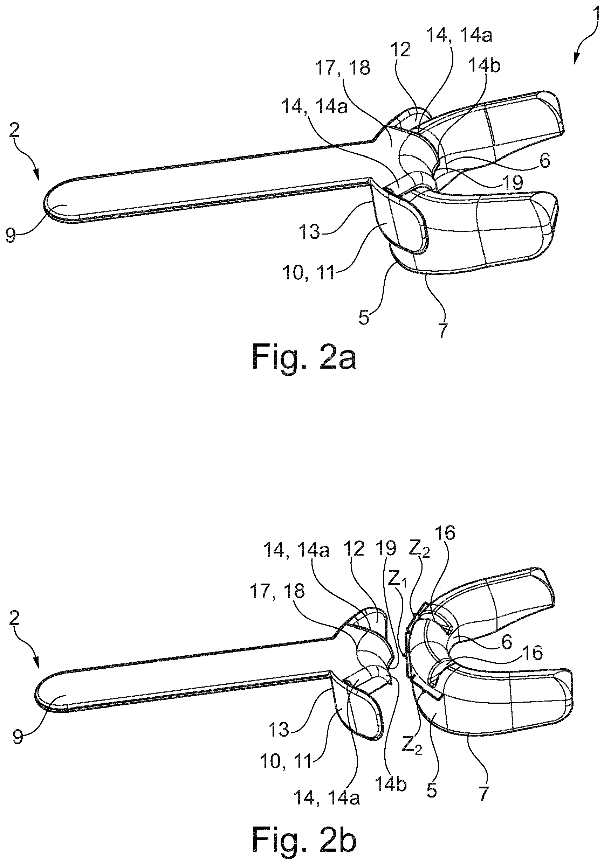

- les figures 2a et 2b sont des représentations en perspective vue de dessous de l'ensemble des figures 1, respectivement pendant (figure 2a) et avant (figure 2b) le maintien de l'ébauche sur la tête de l'outil ;
- la figure 3 est une représentation schématique de la dentition d'un utilisateur adulte, la partie (a) représentant l'arc dentaire supérieur en vue de dessous et la partie (b) représentant l'arc dentaire inférieur en vue de dessus.

En relation avec ces figures, on décrit ci-dessous un ensemble comprenant une ébauche 1 de protège-dents et un outil 2 pour la prise d'empreinte d'au moins une portion d'un arc dentaire 3a, 3b sur ladite ébauche.

Dans cette description, les termes de positionnement dans l'espace sont pris en référence à la disposition de l'ébauche 1 dans la bouche d'un utilisateur lors de la prise d'empreinte. En particulier, on définit un plan transversal T, qui correspond à un plan de symétrie horizontal de la bouche de l'utilisateur de part et d'autre duquel les arcs dentaires 3a, 3b s'étendent, le terme « interne » étant relatif à une disposition proche de ce plan T, le terme « externe » étant relatif à une disposition à distance de ce plan T, une « hauteur » étant prise perpendiculairement à ce plan T.

Par ailleurs, les termes « avant » et « arrière » sont relatifs, pour l'ébauche 1, à sa disposition horizontale dans la bouche de l'utilisateur et, pour l'outil 2, au sens de son déplacement pour disposer ladite ébauche maintenue dans la bouche de l'utilisateur.

L'ébauche 1 présente au moins une gouttière 4 en matériau thermo-déformable, notamment réalisée à base d'éthylène acétate de vinyle (EVA), pour la réception d'au moins une portion d'un arc dentaire 3a, 3b. En particulier, l'ébauche 1 peut être réalisée entièrement en matériau thermo-déformable, ou l'ébauche 1 peut comprendre un insert en matériau non thermo-déformable sur lequel est disposée une gouttière 4 en matériau thermo-formable.

Dans le mode de réalisation représenté, l'ébauche 1 comprend une gouttière 4 qui est agencée pour recevoir l'arc dentaire supérieur 3a. Selon des variantes non représentées, la gouttière 4 peut être agencée pour recevoir l'arc dentaire inférieur 3b, ou l'ébauche peut comprendre deux gouttières inférieure et supérieure superposées pour recevoir respectivement l'arc dentaire supérieur 3a et l'arc dentaire inférieur 3b.

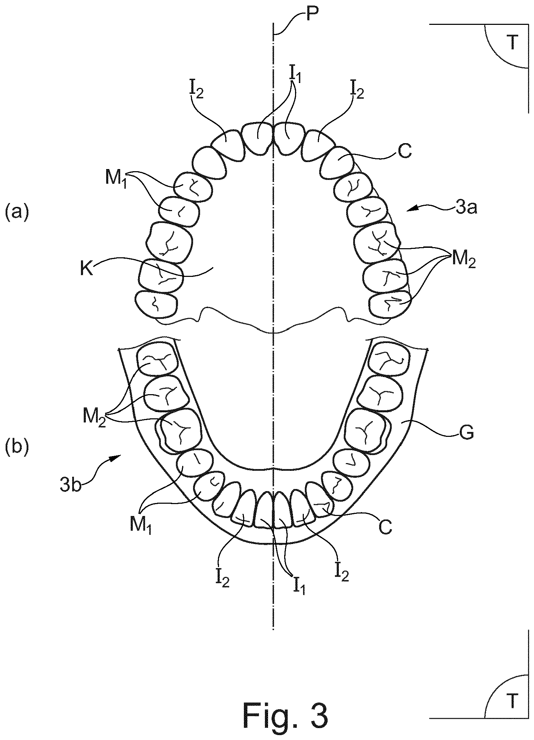

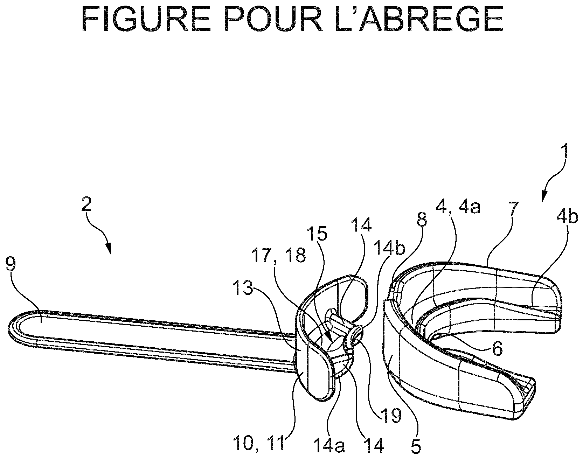

L'ébauche 1 présente une forme en U qui est symétrique par rapport à un plan sagittal P, qui correspond à un plan vertical de symétrie de la bouche de l'utilisateur (figure 3). En particulier, la gouttière 4 présente une forme en U qui s'étend dans le plan transversal T en étant bordée par deux parois en U avant 5 et arrière 6 qui s'étendent toutes deux sensiblement perpendiculairement au plan transversal T, la prise d'empreinte de l'arc dentaire étant effectuée sur ladite gouttière.

La gouttière 4 présente une zone 4a destinée à la réception des incisives I₁,I₂ qui s'étend sur le coude du U à l'arrière de la paroi avant 5, ainsi que deux zones 4b pour la réception des prémolaires M₁ et/ou des molaires M₂ qui s'étendent sur respectivement une branche dudit U.

Ces zones 4a, 4b peuvent présenter plusieurs dimensions, notamment selon la taille de l'ébauche, qui peut varier par exemple selon la forme de la mâchoire, l'âge et/ou le sexe de l'utilisateur. Pour ce faire, des catégories d'utilisateurs peuvent être prédéfinies et, pour chacune d'elles, des dimensions standard relatives aux différentes zones 4a, 4b de réception des dents peuvent être déterminées.

De façon avantageuse, l'ébauche 1 présente une épaisseur sensiblement constante le long de la gouttière 4, notamment au niveau des zones 4b, ce qui permet de faciliter sa fabrication et de limiter son volume, et ainsi d'obtenir un protège dents plus adapté à la morphologie buccale et dentaire de l'utilisateur.

Les parois avant 5 et arrière 6 présentent toutes deux des hauteurs variables le long de leurs formes en U respectives, notamment en fonction de la morphologie des gencives G et/ou du palais K de l'utilisateur. En particulier, les deux parois 5, 6 présentent des variations de hauteurs symétriques par rapport au plan sagittal P, avec des hauteurs plus importantes sur le coude du U, la paroi avant 5 présentant en outre des hauteurs plus importantes que la paroi arrière 6. Par ailleurs, la paroi avant 5 comprend un bord externe 7 qui présente, au niveau du plan sagittal P, un évidement 8 pour la réception du frein des lèvres de l'utilisateur.

Pour former le protège dents, l'utilisateur doit chauffer l'ébauche 1 à une température suffisante pour ramollir la gouttière 4, par exemple en la plongeant dans de l'eau chaude ou en la plaçant au micro-ondes pendant quelques secondes, puis placer ladite ébauche chauffée sur son arc dentaire 3a, 3b, afin de prendre l'empreinte dudit arc dentaire dans ladite gouttière en la mordant, le refroidissement de la gouttière figeant ladite empreinte.

Pour ce faire, l'ensemble comprend en outre un outil 2 avec un manche 9 de préhension portant une tête 10 de maintien de l'ébauche 1 lors de la prise d'empreinte. En particulier, l'ébauche 1 peut être disposée sur la tête 10 de façon réversible afin de faciliter sa manipulation par l'utilisateur, ledit outil étant séparé de l'ébauche 1 après la prise d'empreinte afin de pouvoir utiliser ultérieurement le protège-dents.

L'outil 2 permet la prise d'empreinte de la portion d'arc dentaire 3a, 3b dans la gouttière 4 après le chauffage, notamment en assurant un bon maintien de l'ébauche 1 afin que la gouttière 4 prenne bien la forme de l'arc dentaire 3a, 3b, notamment au niveau des incisives I₁, I₂, qui sont les plus exposées en cas de coup aux mâchoires.

Pour ce faire, la tête 10 présente une voute 11 dont la face avant 12 est complémentaire de la paroi avant 5, et notamment de la portion en coude de U de ladite paroi avant, à l'arrière de laquelle s'étend la zone 4a de réception des incisives I₁, I₂. Dans le mode de réalisation représenté, la voute 11 est formée par une paroi qui s'étend sur un arc de cercle, notamment compris entre 30° et 60°, l'ébauche 1 étant maintenue sur la tête 10 avec le coude de U de sa paroi avant 5 centré par rapport à ladite voute.

En particulier, la voute 11 présente une hauteur réduite, afin de ne pas gêner la disposition de l'ébauche 1 dans la bouche de l'utilisateur. Pour ce faire, dans le mode de réalisation représenté, la paroi avant 5, notamment au niveau de son coude de U, a une hauteur qui est supérieure à celle de la voute 11. Par ailleurs, la voute 11 présente une face arrière 13 depuis laquelle le manche 9 s'étend radialement, afin que ledit manche soit disposé parallèlement au plan sagittal P lors de la disposition de l'ébauche dans la bouche de l'utilisateur, notamment pour ne pas gêner ladite disposition.

Au moins la tête 10 de l'outil 2 est réalisée à base d'un matériau demeurant rigide à une température de déformation de la gouttière 4, ce qui permet à ladite tête de conserver sa forme durant le chauffage de ladite gouttière, notamment lorsqu'elle est plongée, avec l'ébauche 1 maintenue sur elle, dans de l'eau chaude. Pour ce faire, la tête 10 peut par exemple être réalisée à base de polypropylène.

De façon avantageuse, la tête 10 est venue de matière avec le manche 9, ce qui permet de former l'outil 2 en une seule pièce, par exemple par moulage, et ainsi de faciliter sa fabrication.

Pour conserver des épaisseurs de protection optimales tout le long de la gouttière 4, la voute 11 comprend deux pattes 14 qui sont espacées sur sa face avant 12 d'une distance telle qu'elles sont disposées respectivement sous une zone Z₂ d'incisive latérale de la gouttière 4, par exemple sous une des deux incisives latérales I₂ et éventuellement sous la canine C adjacente, une fois l'ébauche 1 maintenue sur la tête 10, lesdites pattes présentant une hauteur qui est agencée pour former entre elles une cavité 15 qui est disposée sous une zone Z₁ d'incisives centrales de ladite gouttière, c'est-à-dire une zone destinée à recevoir au moins les deux incisives centrales I₁.

Ainsi, lors de la prise d'empreintes, le fond de la gouttière 4 vient en butée contre les pattes 14 au niveau de chacune des zones Z₂ d'incisives latérales, ce qui permet de limiter l'enfoncement des dents dans la gouttière 4, et ainsi de répartir, notamment dans la zone 4a de réception des incisives I₁, I₂, du matériau thermo-déformable avec une épaisseur suffisante pour garantir une bonne protection desdites incisives lors du port du protège-dents. En particulier, la cavité 15 permet la formation d'un bourrelet de matière sous les incisives I₁, I₂, améliorant ainsi la protection desdites incisives en cas de choc et évitant le risque de perforation de la zone 4a de la gouttière 4 lors de la prise d'empreinte. De ce fait, on peut prévoir une ébauche 1 avec des épaisseurs réduites le long de la gouttière 4, et ainsi permettre la formation d'un protège dents relativement confortable, sans pour autant limiter la protection apportée par ledit protège dents, notamment au niveau des incisives I₁, I₂.

En outre, les pattes 14 peuvent présenter chacune une portion interne 14a qui est saillante sous l'ébauche 1 lors de son maintien sur la tête 10, ladite portion interne étant agencée pour permettre la formation d'un espace ventilatoire sous la zone 4a de réception des incisives I₁, I₂ pendant la prise d'empreinte, et ainsi améliorer le confort du protège dents en permettant à l'utilisateur de respirer par ledit espace, notamment lorsqu'il serre les dents sur ledit protège dents.

De façon avantageuse, les pattes 14 présentent chacune une extrémité avant 14b qui forme un crochet destiné à venir en prise sur le coude de U de la paroi arrière 6 pour assurer le maintien de l'ébauche 1 sur la tête 10, notamment en limitant les risques de déplacement relatifs de ladite ébauche sur ladite tête dans le plan sagittal P.

Par ailleurs, l'ébauche 1 comprend deux rainures 16 qui sont formées sous respectivement une zone Z₂ d'incisive latérale I₂ et qui présentent une géométrie complémentaire à celle des pattes 14, afin de pouvoir assurer, en disposant lesdites pattes dans lesdites rainures, le maintien de l'ébauche 1 sur la tête 10 en limitant les risques de déplacement relatif de ladite ébauche le long de la voute 11.

Dans le mode de réalisation représenté, le manche 9 présente une extension avant 17 qui s'étend sous et entre les pattes 14 en étant venue de matière avec elles, ladite extension présentant un fond 18 qui relie les portions internes 14a des pattes 14 pour délimiter la cavité 15 en partie interne et une paroi avant 19 qui relie les extrémités avant 14b desdites pattes pour délimiter la cavité 15 en partie avant.

En particulier, le fond 18 est raccordé entre les pattes 14 de manière à délimiter en hauteur les portions internes 14a destinées à faire saillie sous l'ébauche 1 lorsque lesdites pattes sont disposées dans les rainures 16, afin de ménager, lors de la prise d'empreinte, un espace ventilatoire qui est délimité en partie interne par l'épaisseur de matériau déformable venant en butée contre ledit fond lors de ladite prise d'empreinte.

Par ailleurs, la paroi avant 19 présente une hauteur qui est sensiblement égale à celle des extrémités avant 14b des pattes 14, ce qui permet de faciliter la fabrication, notamment par moulage, de l'outil 2.

## Revendications

1. Ensemble comprenant une ébauche (1) de protège-dents présentant au moins une gouttière (4) en matériau thermo-déformable pour la réception d'au moins une portion d'un arc dentaire (3a, 3b), ledit ensemble comprenant en outre un outil (2) permettant la prise d'empreinte de ladite portion d'arc dans ladite gouttière après chauffage dudit matériau, ledit outil présentant un manche (9) de préhension portant une tête (10) de maintien de ladite ébauche, au moins ladite tête étant réalisée à base d'un matériau demeurant rigide à une température de déformation de la gouttière (4), ladite tête présentant une voute (11) dont la face avant (12) est complémentaire d'une paroi avant (5) de ladite ébauche, au moins une zone (4a) de la gouttière (4) destinée à la réception des incisives (I₁, I₂) s'étendant à l'arrière de ladite paroi avant, ledit ensemble étant **caractérisé en ce que** la voute (11) comprend deux pattes (14) qui sont espacées sur sa face avant (12) d'une distance telle qu'elles sont disposées respectivement sous une zone (Z₂) d'incisive latérale (I₂) de la gouttière (4) une fois maintenue sur la tête (10), lesdites pattes présentant une hauteur qui est agencée pour former entre elles une cavité (15) qui est disposée sous une zone (Z₁) d'incisives centrales (I₁) de ladite gouttière.

2. Ensemble selon la revendication 1, **caractérisé en ce que** l'ébauche (1) comprend deux rainures (16) qui sont formées sous respectivement une zone (Z₂) d'incisive latérale (I₂), lesdites rainures présentant une géométrie complémentaire à celles des pattes (14) afin de pouvoir assurer le maintien de l'ébauche (1) sur la tête (10) en disposant lesdites pattes dans lesdites rainures.

3. Ensemble selon l'une des revendications 1 ou 2, **caractérisé en ce que** les pattes (14) présentent chacune une extrémité avant (14b) qui forme un crochet destiné à venir en prise sur une paroi arrière (6) de l'ébauche (1) pour assurer son maintien sur la tête (10).

4. Ensemble selon l'une quelconque des revendications 1 à 3, **caractérisé en ce que** les pattes (14) comprennent chacune une extrémité avant (14b) qui sont reliées par une paroi avant (19) pour délimiter la cavité (15) en partie avant.

5. Ensemble selon l'une quelconque des revendications 1 à 4, **caractérisé en ce que** la cavité (15) comprend un fond (18) qui s'étend sous les pattes (14) pour délimiter ladite cavité en partie interne.

6. Ensemble selon l'une quelconque des revendications 1 à 5, **caractérisé en ce que** les pattes (14) présentent chacune une portion interne (14a) qui est saillante sous l'ébauche (1) lors de son maintien sur la tête (10), ladite épaisseur étant agencée pour permettre la formation d'un espace ventilatoire sous la zone (4a) de réception des incisives (I₁, I₂) pendant la prise d'empreinte.

7. Ensemble selon l'une quelconque des revendications 1 à 6, **caractérisé en ce que** l'ébauche (1) présente une épaisseur sensiblement constante le long de la gouttière (4).

8. Ensemble selon l'une quelconque des revendications 1 à 7, **caractérisé en ce que** la voute (11) s'étend sur un arc de cercle compris entre 30° et 60°.

9. Ensemble selon l'une quelconque des revendications 1 à 8, **caractérisé en ce que** l'ébauche (1) présente une forme en U qui est symétrique par rapport à un plan sagittal (P), ladite ébauche étant maintenue sur la tête (10) avec le coude du U centré par rapport à la voute (11).

10. Ensemble selon la revendication 9, **caractérisé en ce que** la zone (4a) de réception des incisives (I₁, I₂) s'étend sur le coude du U, deux zones (4b) de réception des prémolaires (M₁) et/ou des molaires (M₂) s'étendant sur respectivement une branche dudit U.

11. Ensemble selon l'une quelconque des revendications 1 à 10, **caractérisé en ce que** la tête (10) est venue de matière avec le manche (9) de préhension.

12. Ensemble selon l'une quelconque des revendications 1 à 11, **caractérisé en ce que** la voute (11) présente une face arrière (13) depuis laquelle le manche (9) de préhension s'étend radialement.

## Patentansprüche

1. Set, das einen Zahnschutzrohling (1) umfasst, der mindestens eine Schiene (4) aus thermisch verformbarem Material zum Aufnehmen von mindestens einem Abschnitt eines Zahnbogens (3a, 3b) umfasst, wobei das Set weiter ein Werkzeug (2) umfasst, welches die Abdrucknahme des Bogenabschnitts in der Schiene nach Erwärmen des Materials ermöglicht, wobei das Werkzeug einen Handgriff (9) aufweist, der einen Kopf (10) zum Halten des Rohlings trägt, wobei mindestens der Kopf auf Basis eines Materials ausgeführt ist, das bei einer Verformungstemperatur der Schiene (4) starr bleibt, wobei der Kopf eine Wölbung (11) aufweist, deren Vorderfläche (12) zu einer Vorderwand (5) des Rohlings komplementär ist, wobei sich mindestens eine Zone (4a) der Schiene (4), die zum Aufnehmen der Schneidezähne (I₁, I₂) vorgesehen ist, hinter der Vorderwand erstreckt, wobei das Set **dadurch gekennzeichnet ist, dass** die Wölbung (11) zwei Klauen (14) umfasst, die an ihrer Vorderfläche (12) um eine Distanz beabstandet sind, derart, dass sie jeweils unter einer Zone (Z₂) eines seitlichen Schneidezahns (I₂) der Schiene (4) angeordnet sind, sobald diese am Kopf (10) gehalten wird, wobei die Klauen eine Höhe aufweisen, die dafür eingerichtet ist, zwischen ihnen einen Hohlraum (15) zu bilden, der unter einer Zone (Z₁) von mittleren Schneidezähnen (I₁) der Schiene angeordnet ist.

2. Set nach Anspruch 1, **dadurch gekennzeichnet, dass** der Rohling (1) zwei Rillen (16) umfasst, die unter jeweils einer Zone (Z₂) eines seitlichen Schneidezahns (I₂) gebildet sind, wobei die Rillen eine Geometrie aufweisen, die zu derjenigen der Klauen (14) komplementär ist, um den Halt des Rohlings (1) am Kopf (10) durch Anordnen der Klauen in den Rillen sicherstellen zu können.

3. Set nach einem der Ansprüche 1 oder 2, **dadurch gekennzeichnet, dass** die Klauen (14) jede ein vorderes Ende (14b) aufweisen, das einen Haken bildet, der dazu vorgesehen ist, an einer Hinterwand (6) des Rohlings (1) in Eingriff zu gehen, um dessen Halt am Kopf (10) sicherzustellen.

4. Set nach einem der Ansprüche 1 bis 3, **dadurch gekennzeichnet, dass** die Klauen (14) jede ein vorderes Ende (14b) umfassen, die über eine Vorderwand (19) verbunden sind, um den Hohlraum (15) im vorderen Teil zu begrenzen.

5. Set nach einem der Ansprüche 1 bis 4, **dadurch gekennzeichnet, dass** der Hohlraum (15) einen Boden (18) umfasst, der sich unter den Klauen (14) erstreckt, um den Hohlraum im inneren Teil zu begrenzen.

6. Set nach einem der Ansprüche 1 bis 5, **dadurch gekennzeichnet, dass** die Klauen (14) jede einen inneren Abschnitt (14a) aufweisen, der bei deren Halt am Kopf (10) unter dem Rohling (1) vorspringt, wobei die Dicke dafür eingerichtet ist, das Bilden eines Ventilationsraums unter der Aufnahmezone (4a) der Schneidezähne (I₁, I₂) während der Abdrucknahme zu ermöglichen.

7. Set nach einem der Ansprüche 1 bis 6, **dadurch gekennzeichnet, dass** der Rohling (1) eine Dicke aufweist, die im Wesentlichen entlang der Schiene (4) konstant ist.

8. Set nach einem der Ansprüche 1 bis 7, **dadurch gekennzeichnet, dass** sich die Wölbung (11) über einen Kreisbogen im Bereich zwischen 30° und 60° erstreckt.

9. Set nach einem der Ansprüche 1 bis 8, **dadurch gekennzeichnet, dass** der Rohling (1) eine U-Form aufweist, die in Bezug auf eine sagittale Ebene (P) symmetrisch ist, wobei der Rohling mit der Biegung des U in Bezug auf die Wölbung (11) zentriert am Kopf (10) gehalten wird.

10. Set nach Anspruch 9, **dadurch gekennzeichnet, dass** sich die Aufnahmezone (4a) der Schneidezähne (I₁, I₂) über die Biegung des U erstreckt, wobei sich zwei Aufnahmezonen (4b) der Prämolaren (M₁) und/oder der Molaren (M₂) über jeweils einen Schenkel des U erstrecken.

11. Set nach einem der Ansprüche 1 bis 10, **dadurch gekennzeichnet, dass** der Kopf (10) mit dem Handgriff (9) aus Material hervorgegangen ist.

12. Set nach einem der Ansprüche 1 bis 11, **dadurch gekennzeichnet, dass** die Wölbung (11) eine Hinterfläche (13) aufweist, ab der sich der Handgriff (9) radial erstreckt.

## Claims

1. Assembly comprising a mouth guard blank (1) having at least one channel (4) made of a heat-deformable material for the reception of at least one portion of a dental arch (3a, 3b), said assembly further comprising a tool (2) allowing for the taking of an impression of said portion of arch in said channel after heating of said material, said tool having a gripping handle (9) bearing a head (10) for maintaining said blank, at least said head being made from a material remaining rigid at a deformation temperature of the channel (4), said head having a vault (11) of which the front face (12) is complementary with a front wall (5) of said blank, at least one zone (4a) of the channel (4) intended for receiving incisors (I₁, I₂) extending to the rear of said front wall, said assembly being **characterised in that** the vault (11) comprises two tabs (14) which are spaced apart on its front face (12) by a distance such that they are arranged respectively under a lateral incisor (I₂) zone (Z₂) of the channel (4) once maintained on the head (10), said tabs having a height that is arranged in order to form between them a cavity (15) which is arranged under a central incisor (I₁) zone (Z₁) of said channel.

2. Assembly according to claim 1, **characterised in that** the blank (1) comprises two grooves (16) which are formed under respectively a lateral incisor (I₂) zone (Z₂), said grooves having a geometry that is complementary to that of the tabs (14) in order to be able to provide the maintaining of the blank (1) on the head (10) by arranging said tabs in said grooves.

3. Assembly according to one of claims 1 or 2, **characterised in that** the tabs (14) each have a front end (14b) that forms a hook intended to engage with a rear wall (6) of the blank (1) in order to ensure the maintaining thereof on the head (10).

4. Assembly according to any of claims 1 to 3, **characterised in that** the tabs (14) each comprise a front end (14b) which are connected by a front wall (19) in order to delimit the cavity (15) in the front portion.

5. Assembly according to any of claims 1 to 4, **characterised in that** the cavity (15) comprises a bottom (18) that extends under the tabs (14) in order to delimit said cavity in the internal portion.

6. Assembly according to any of claims 1 to 5, **characterised in that** the tabs (14) each have an internal portion (14a) which is protruding under the blank (1) during the maintaining thereof on the head (10), said thickness being arranged to allow for the formation of a ventilator space under the zone (4a) for receiving incisors (I₁, I₂) during the taking of an impression.

7. Assembly according to any of claims 1 to 6, **characterised in that** the blank (1) has a substantially constant thickness along the channel (4).

8. Assembly according to any of claims 1 to 7, **characterised in that** the vault (11) extends over an arc of circle between 30° and 60°.

9. Assembly according to any of claims 1 to 8, **characterised in that** the blank (1) has a U shape which is symmetrical in relation to a sagittal plane (P), said blank being maintained on the head (10) with the elbow of the U centred with respect to the vault (11).

10. Assembly according to claim 9, **characterised in that** the zone (4a) for receiving incisors (I₁, I₂) extends over the elbow of the U, with two zones (4b) for receiving premolars (M₁) and/or molars (M₂) extending over respectively a branch of said U.

11. Assembly according to any of claims 1 to 10, **characterised in that** the head (10) is made integral in one piece of material with the gripping handle (9).

12. Assembly according to any of claims 1 to 11, **characterised in that** the vault (11) has a rear face (13) from which the gripping handle (9) extends radially.
